# EUROPÄISCHE PATENTSCHRIFT

(11) **EP 3 686 096 B1**
(45) Veröffentlichungstag und Bekanntmachung des Hinweises auf die Patenterteilung: **02.06.2021**
(21) Anmeldenummer: 19153710.9
(22) Anmeldetag: 25.01.2019
(51) Int. Cl.: B62H 5/02, B62K 3/00, B62K 15/00, B62H 5/00

(54) **DIEBSTAHLGESICHERTER ROLLER**
SCOOTER PROVIDED WITH AN ANTI-THEFT
TROTTINETTE POURVUE D'ANTI-VOL

(43) Veröffentlichungstag der Anmeldung: 29.07.2020
(73) Patentinhaber: Schnippering, Axel, 58339 Breckerfeld (DE)
(72) Erfinder: Schnippering, Axel, 58339 Breckerfeld (DE)
(74) Vertreter: Patentanwälte Dörner & Kötter PartG mbB

(56) Entgegenhaltungen:
- WO-A1-2015/161365
- BE-A3- 1 004 957
- DE-U1- 20 012 234
- US-B1- 9 610 998

## Beschreibung

Die Erfindung betrifft einen Roller, insbesondere Elektroroller, mit einer Diebstahlsicherung nach dem Oberbegriff des Patentanspruchs 1.

Mit einem Elektroantrieb versehene Roller, auch als E-Scooter bezeichnet, erfreuen sich zunehmender Beliebtheit. Diese Fahrzeuge sind kompakt ausgestaltet und durch die Möglichkeit des Umlegens der Längssäule platzsparend verstaubar. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichtes wenig Energie. Außerdem ist ihre benötigte Stellfläche um ein Vielfaches kleiner und sie sind aufgrund ihrer Zusammenfaltbarkeit einfach zu handhaben. Roller der vorgenannten Art sind beispielsweise in der EP 2 425 989 A1 sowie der DE 200 12 234 U1, die alle Merkmale des Oberbegriffs des Anspruchs 1 offenbart, beschrieben.

Nachteilig bei den vorbekannten Elektrorollern ist, dass diese hochpreisigen Fahrzeuge durch ihr geringes Eigengewicht und ihre geringen Abmessungen einfach entwendbar sind. Zur Sicherung eines solchen Fahrzeugs sind daher zusätzliche Abschließvorrichtungen wie beispielsweise Ketten mit Vorhängeschlössern erforderlich, um das Fahrzeug an einen standortfesten Gegenstand anzuketten oder dieses in sonstiger Weise fahrunfähig zu machen.

Hier will Erfindung Abhilfe schaffen. Der Erfindung liegt die Aufgabe zugrunde, einen Roller, insbesondere Elektroroller der vorstehenden Art bereitzustellen, der eine integrierte Diebstahlsicherung aufweist. Gemäß der Erfindung wird diese Aufgabe durch einen Roller mit den Merkmalen des kennzeichnenden Teils des Patentanspruchs 1 gelöst.

Mit der Erfindung ist ein Roller, insbesondere Elektroroller bereitgestellt, der eine integrierte Diebstahlsicherung aufweist. Dadurch, dass die Diebstahlsicherung ein Bügelelement umfasst, das die Lenkstange umgreifend mit seinen freien Enden mit zwei gegenüberliegend an dem Trittelement angeordneten Aufnahmen formschlüssig verbindbar und in dieser Position über wenigstens ein Schließelement verriegelbar ist, ist eine einfache und kostengünstig herstellbare und zugleich integrierte Diebstahlsicherung erzielt.

In Weiterbildung der Erfindung ist das Bügelelement derart abgewinkelt ausgebildet, dass es in einer zweiten Positionierung in den Aufnahmen in Art eines Gepäckträgers das Hinterrad der heckseitigen Radschwinge überragend anstellbar ist ("Gepäckträgerposition"). Hierdurch ist eine funktionelle sowie optisch ansprechende Anordnung des Bügelelements bei nicht aktivierter Diebstahlsicherung ermöglicht. Vorteilhaft überragt das Bügelelement in der zweiten Positionierung das Hinterrad in Längsrichtung.

In weiterer Ausgestaltung der Erfindung ist der abgewinkelte, das Hinterrad überragende Abschnitt des Bügelelements derart winklig angestellt, dass er einen nach hinten sich vergrößernden vertikalen Abstand zum Hinterrad aufweist. Hierdurch ist eine stabile Hochkantaufstellung des Rollers mit eingeschwenkter Lenkstange ermöglicht.

In Weiterbildung der Erfindung ist an der Heckschwinge ein das Hinterrad bereichsweise überdeckendes Schutzblech angeordnet, das von dem Bügelelement in seiner zweiten Position eingefasst ist. Hierdurch ist eine optisch ansprechende Integration des Bügels in das Rollerdesign erzielt. Dabei sind die Aufnahmen vorzugsweise gegenüberliegend an der heckseitigen Radschwinge befestigt. Durch eine solche Anordnung ist eine einfache Nachrüstung eines Rollers mit Bügelaufnahmen ermöglicht.

Die Aufnahmen umfassen jeweils einen Führungssteg, auf den ein Schenkel des Bügelelements mit einer hierzu an diesem angeordnete Führungsnut aufschiebbar ist. Hierdurch ist eine einfache Montage des Bügelelements erzielt. Bevorzugt weisen der Führungssteg sowie die den Schenkeln des Bügelelements angeordneten Führungsnuten einen T-förmigen Querschnitt auf, wodurch eine stabile formschlüssige Verbindung zwischen Aufnahmen und Bügelelement erzielt ist. Dabei sind die Schenkel des Bügelelements besonders bevorzugt zumindest bereichsweise als C-Profil ausgebildet, wodurch die Führungsnuten mit T-förmigen Querschnitt gebildet sind.

Weiterhin ist ein Schließelement vorhanden. Entweder ist das Schließelement an wenigstens einem Schenkel des Bügelelements angeordnet, das einen über einen Schlüssel in die Führungsnut des Schenkels sowie aus dieser hinaus bewegbaren Sperrriegel aufweist. Hierdurch ist eine Blockierung bzw. Freigabe des Verschiebeweges des Bügelelements entlang des Führungssteges der Aufnahme durch Betätigung des Sperrriegels über einen Schlüssel ermöglicht. Im verschlossenen Zustand des Schließelements liegt der Sperrriegel bei auf die Führungsstege der Aufnahmen aufgeschobenem Bügelelement an einem Führungssteg an, sodass ein Abziehen des Bügelelements von dem Führungssteg der Aufnahme wirksam verhindert ist. Der Sperrriegel kann dabei über den Schlüssel sowohl rotierbar, als auch verschiebbar sein. Wesentlich ist, dass durch eine über den Schlüssel erfolgte Lageänderung eine Blockierung des Verschiebeweges zwischen Führungsnut des Schenkels des Bügelelements und Führungssteg der Aufnahme erzielbar ist. Oder das Schließelement ist an der Aufnahme angeordnet. In diesem Fall ist der Sperrriegel über einen Schlüssel in eine in den auf dem Führungssteg aufgeschobenen Schenkel des Bügelelementes hierzu vorgesehene Bohrung hineinbewegbar angeordnet.

In Ausgestaltung der Erfindung sind die Führungsstege der Aufnahmen an ihrem dem Trittelement zugewandten Ende (bzw. dem Quersteg des montierten Bügelelements abgewandten Ende) abgeschrägt ausgebildet. Dabei sind die Führungsstege vorzugsweise in Art einer dreieck- oder trapezförmigen Kontur ausgebildet, wodurch zwei gegenüberliegende Anschlagschrägen gebildet sind. Vorzugsweise ist der Sperrriegel über den Schlüssel drehbar und weist eine schräge Fläche auf, die in einer Drehstellung an eine Anschlagschräge eines Führungssteges anlegbar ist. Hierdurch ist durch eine einfache Drehbewegung des Sperrriegels eine Blockierung bzw. Freigabe des Bügelelements ermöglicht. Durch die beiden gegenüberliegenden Anschlagschrägen der Führungsstege ist unabhängig von der Positionierung des Bügelelements ("Diebstahlsicherungsposition" oder "Gepäckträgerposition") eine Anlage des Sperrriegels mit seiner schrägen Fläche an einer Anschlagschräge zur Blockierung des Bügelelements ermöglicht.

In weiterer Ausgestaltung der Erfindung ist das Bügelelement zumindest teilweise aus einem elastischen Material, vorzugsweise Kunststoff und/oder zumindest teilweise aus Metall ausgebildet. Insbesondere durch eine Gestaltung des Bügelelements aus Metall, das mit einer elastischen Kunststoffschicht versehen ist, ist eine vorteilhafte Haptik sowie im Bereich der Aufnahmen eine spielarme Verbindung erzielbar. Diese spielarme Verbindung kann dadurch weiter optimiert werden, dass der Sperrriegel des Schließelements zumindest teilweise aus einem elastischen Material, vorzugsweise Kunststoff hergestellt ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die Darstellung eines Elektrorollers mit eingeschwenkter Lenkstange;
- Figur 2: die Detaildarstellung der Hinterradschwinge des Elektrorollers aus Figur 1 mit Bügelelement in "Gepäckträgerposition";
- Figur 3: die Detaildarstellung der Hinterradschwinge des Elektrorollers aus Figur 1 mit Bügelelement in "Diebstahlsicherungsposition";
- Figur 4: die schematische Darstellung des Bügelelements mit Aufnahme aus Figur 2
a) in Seitenansicht mit Schließelement in entriegelter Position;
b) in Seitenansicht mit Schließelement in verriegelter Position;
c) im Querschnitt A-A;
- Figur 5: die schematische Darstellung des Bügelelements mit Aufnahme aus Figur 3
a) in Seitenansicht mit Schließelement in entriegelter Position;
b) in Seitenansicht mit Schließelement in verriegelter Position;
c) im Querschnitt A-A;

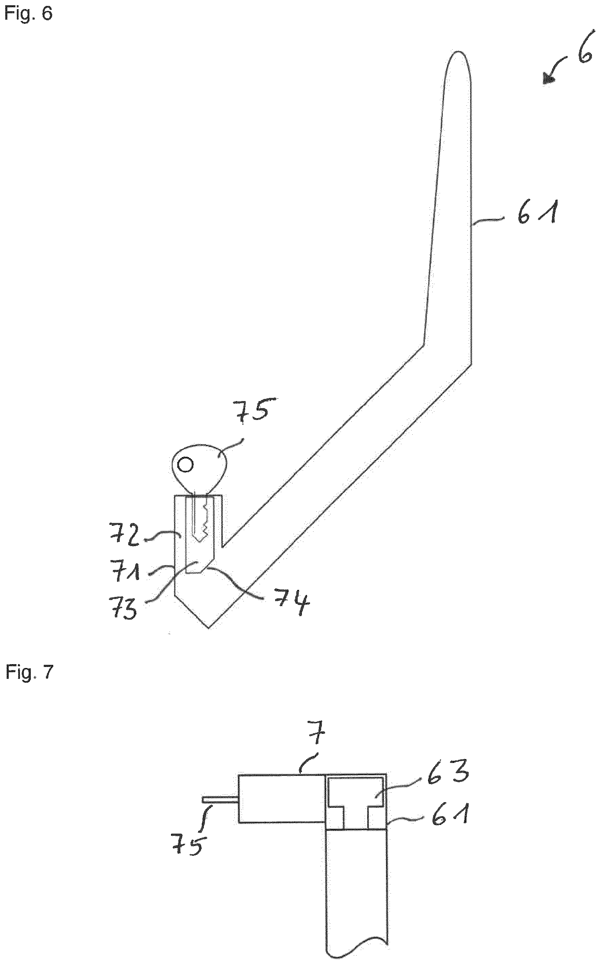

- Figur 6: die schematische Darstellung des Bügelelements der Anordnung aus Figur 5;
- Figur 7: die schematische Darstellung des Bügelelements aus Figur 6 im Bereich der Führungsnut in der Ansicht von unten und
- Figur 8: die schematische Darstellung der Aufnahme der Anordnung aus Figur 5
a) in der Draufsicht;
b) im Schnitt A-A.

Der als Ausführungsbeispiel gewählte Elektroroller 1 umfasst eine Lenkstange 2 und ein Trittelement 3, die in bekannter Art und Weise über eine arretierbare Schwenkvorrichtung 4 zueinander schwenkbar miteinander verbunden sind. Die Lenkstange ist zur Längenverstellung teleskopierbar ausgebildet und an einer Seite mit einem Vorderrad 21 sowie an der diesen gegenüberliegenden Seite mit einem einklappbar ausgebildeten Lenker 22 versehen. An dem Trittelement 3 ist heckseitig ein Hinterrad 31 über eine Hinterradschwinge 32 mit dem Trittelement 3 verbunden. Hinterrad 31 und Vorderrad 21 sind mit einem - nicht dargestellten - Elektroantrieb verbunden. Die Lenkstange 2 kann über die arretierbare Schwenkvorrichtung 4 in eine im Wesentlichen zum Trittelement 3 parallele Position verschwenkt werden. Für Einzelheiten des grundsätzlichen Aufbaus eines solchen Elektrorollers wird an dieser Stelle auf die EP 2 425 989 A1 verwiesen. Erfindungswesentlich ist die Diebstahlsicherung des Elektrorollers 1, der nachfolgend im Einzelnen beschrieben wird.

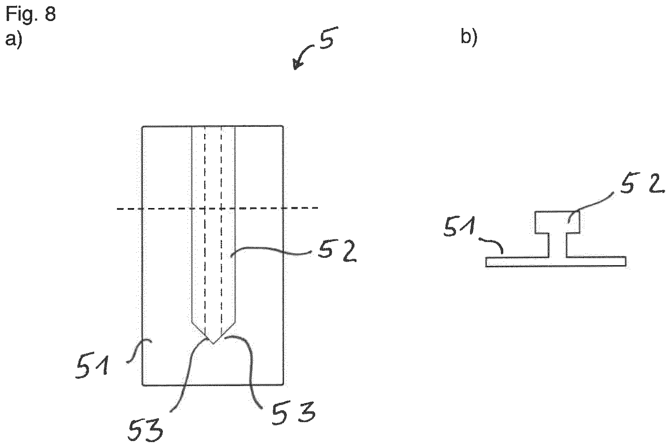

An der Hinterradschwinge 32 des Trittelements 3 des Elektrorollers 1 ist auf beiden Seiten des Hinterrades 31 jeweils eine Aufnahme 5 angeordnet. Die Aufnahme 5 ist in Figur 8 gezeigt. Sie besteht aus einer Grundplatte 51, auf der ein Führungssteg 52 angeformt ist, der einen im Wesentlichen T-förmigen Querschnitt aufweist. An seinem dem Trittelement 3 zugewandten Ende ist der Führungssteg 52 an seinen gegenüberliegenden Seiten mit einer Anschlagschräge 53 versehen, wodurch der Führungssteg 52 endseitig im Wesentlichen dreieckförmig ausgebildet ist.

Auf die gegenüberliegend angeordneten Aufnahmen 5 ist ein Bügelelement 6 aufschiebbar. Das Bügelelement 6 ist im Ausführungsbeispiel aus C-Profilen gebildet und weist einen im Wesentlichen U-förmigen Verlauf auf, wobei die beiden gegenüberliegenden Schenkel 61 des Bügelelements 6, die über einen Quersteg 62 miteinander verbunden sind, abgewinkelt ausgebildet sind. Duch die Gestaltung der Schenkel 61 als C-förmigen Profile weisen diese eine Führungsnut 63 mit T-förmigem Querschnitt auf. Diese Führungsnut 63 ist derart dimensioniert, dass sie mit dem Führungsstegen 52 der Aufnahmen 5, auf den diese aufschiebbar sind, korrespondiert.

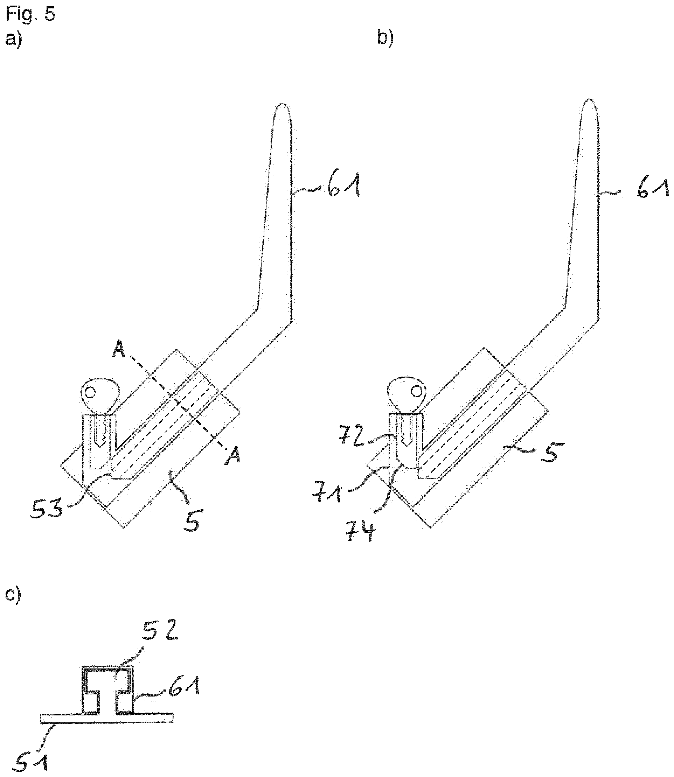

An einem Schenkel 61 des Bügelelements 6 ist ein Schließelement 7 angeordnet. Das Schließelement 7 umfasst einen Stutzen 71 mit einem Kanal 72, der in die Führungsnut 63 des Schenkels 61 mündet. In dem Stutzen 71 ist ein Sperrriegel 73, der an seinem dem Schenkel 61 zugewandten Ende mit einer Schräge 74 versehen ist, über einen Schlüssel 75 drehbar gelagert. Der Sperrriegel 73 ist in bekannter Art und Weise mit - nicht dargestellten - Schließelementen versehen, die eine Drehung des Sperrriegels 73 nur bei eingeführtem Schlüssel 75 ermöglichen. Der Sperrriegel 73 ist derart in dem Stutzen 71 angeordnet, dass die Schräge 74 in einer ersten Drehposition in Flucht mit der Führungsnut 63 des Schenkels 61 ist (entriegelte Stellung, vgl. Fig. 5 a)). In einer zweiten Drehposition ragt der Sperrriegel 73 endseitig mit seiner der Schräge abgewandten Seite in die Führungsnut 63 des Schenkels 61 hinein, wodurch diese bei auf einer Aufnahme 5 aufgeschobenem Schenkel 61 an der Anschlagschräge 53 des Führungssteges 52 der Aufnahme 5 anschlägt (verriegelte Stellung, vgl. Fig. 5 b)). Ein Abziehen des Schenkels 61 von der Aufnahme 5 ist somit verhindert.

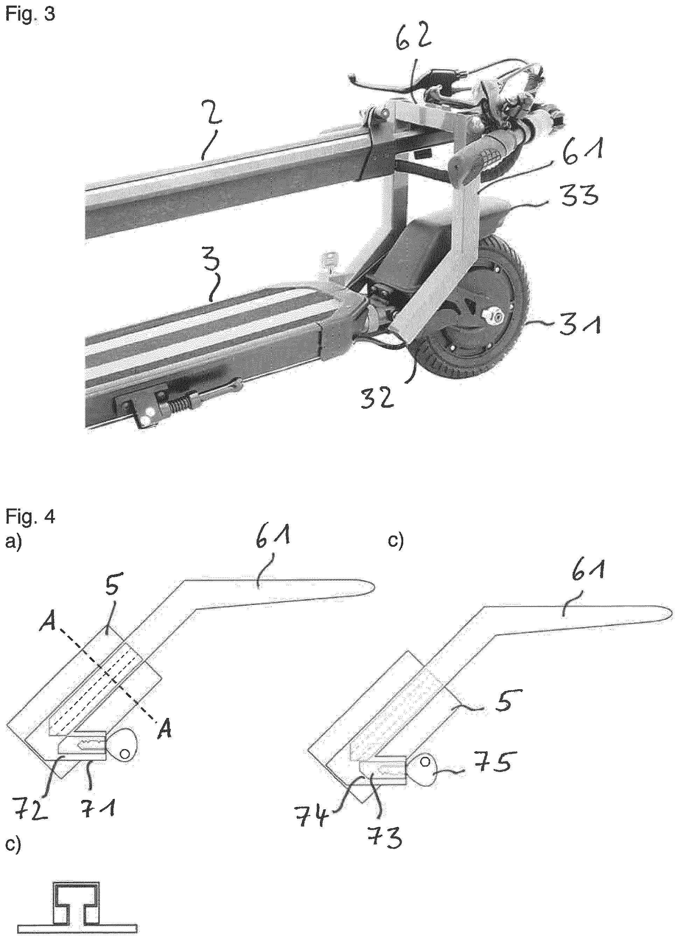

In Figur 3 ist der Elektroroller 1 in diebstahlgesicherter Position gezeigt. Hierbei ist das Bügelelement 6 über die verschwenkte Lenkstange 2 gestülpt und mit seinem beiden Schenkeln 61 über deren Führungsnuten 63 auf jeweils einen Führungssteg 52 einer Aufnahme 5 geschoben. Der Sperrriegel 73 des an einem Schenkel 61 angeordnten Schließelements 7 ist über einen Schlüssel 75 in die verriegelte Stellung gedreht, wodurch das Bügelelement 6 fest mit der Hinterradschwinge 32 des Trittelements 3 verbundenen Aufnahme 5 verbunden ist.

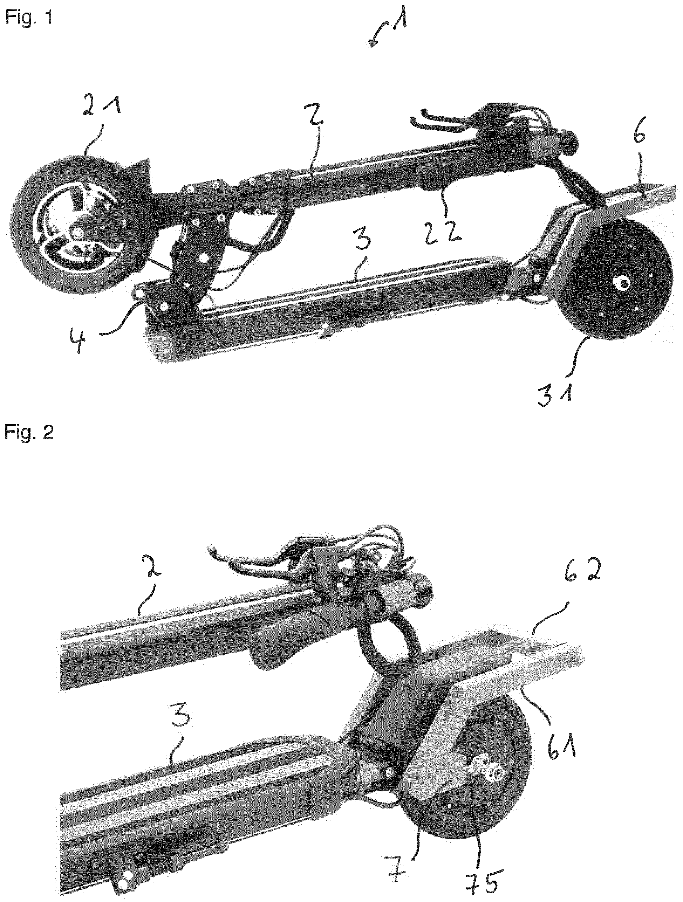

In Figur 2 ist die Anordnung des Bügelelements im fahrbereiten Zustand des Elektrorollers 1 gezeigt. Hier ist das Bügelelement 6 um 180° um seine Längsachse gedreht angeordnet mit seinen Schenkeln 61 auf die Führungsstege 52 der Aufnahmen 5 aufgeschoben und in der vorstehenden Art und weise über einen Schlüssel 75 fest mit dem Trittelement 3 verbunden. Der Schenkel 61 mit dem Schließelement 7 befindet sich hier gegenüber der diebstahlgesicherten Position an der gegenüberliegenden Aufnahme 5. In dieser Position rahmt das Bügelelement 6 das über dem Hinterrad 31 angestellte Schutzblech 33 ein, wodurch eine unbeeinträchtigende Unterbringung mit einem harmonischen Design erzielt ist. Wie aus Figur 1 ersichtlich ist der Quersteg 62 des Bügelelements in dieser Position zum Hinterrad 31 beabstandet und in etwa mit diesem abschließend angeordnet. Hierdurch läßt sich der Elektroroller mit verschwenkter Lenkstange stabil aufrichten, wodurch dieser platzsparend verstaut werden kann.

## Patentansprüche

1. Roller, insbesondere Elektroroller (1), umfassend eine Lenksstange (2), die schwenkbar mit einem Trittelement (3) verbunden ist, das zumindest heckseitig eine Radschwinge (32) aufweist, wobei eine Diebstahlsicherung angeordnet ist, durch welche die Lenkstange (2) in verschwenkter Position festlegbar ist, wobei die Diebstahlsicherung ein Bügelelement (6) umfasst, das die Lenkstange (2) umgreifend mit seinen freien Enden mit zwei gegenüberliegend an dem Trittelement (3) angeordneten Aufnahmen (5) formschlüssig verbindbar und in dieser Position über wenigstens ein Schließelement (7) verriegelbar ist, **dadurch gekennzeichnet, dass** die Aufnahmen (5) jeweils einen Führungssteg (52) umfassen, auf den ein Schenkel (61) des Bügelelements (6) mit einer hierzu an diesem angeordneten Führungsnut (63) aufschiebbar ist und wobei
entweder ein Schließelement (7) an wenigstens einem Schenkel (61) des Bügelelements (6) angeordnet ist, das einen über einen Schlüssel (75) in die Führungsnut (63) des Schenkels (61) sowie aus dieser hinaus bewegbaren Sperrriegel (73) aufweist,
oder ein Schließelement an wenigstens einer Aufnahme (5) angeordnet ist, das einen über einen Schlüssel (75) in eine in dem auf den Führungssteg (52) aufgeschobenen Schenkel (61) des Bügelelementes (6) hierzu vorgesehene Bohrung hineinbewegbaren Sperrriegel aufweist.

2. Roller nach Anspruch 1, **dadurch gekennzeichnet, dass** das Bügelelement (6) derart abgewinkelt ausgebildet ist, dass es in einer zweiten Positionierung in den Aufnahmen (5) in Art eines Gepäckträgers das Hinterrad (31) der heckseitigen Radschwinge (32) überragend anstellbar ist.

3. Roller nach Anspruch 2, **dadurch gekennzeichnet, dass** das Bügelelement (6) in der zweiten Positionierung das Hinterrad (31) in Längsrichtung überragt.

4. Roller nach Anspruch 2 oder 3, **dadurch gekennzeichnet, dass** der abgewinkelte, das Hinterrad (31) überragende Abschnitt des Bügelelements (6) derart winklig angestellt ist, dass er einen nach hinten sich vergrößernden vertikalen Abstand zum Hinterrad (31) aufweist.

5. Roller nach einem der Ansprüche 2 bis 4 **dadurch gekennzeichnet, dass** an der heckseitigen Radschwinge (32) ein das Hinterrad (31) bereichsweise überdeckendes Schutzblech (33) angeordnet ist, das von dem Bügelelement (6) in der zweiten Positionierung eingefasst ist.

6. Roller nach einem der vorgenannten Ansprüche, **dadurch gekennzeichnet, dass** die Aufnahmen (5) gegenüberliegend an der heckseitigen Radschwinge (32) befestigt sind.

7. Roller nach einem der vorgenannten Ansprüche, **dadurch gekennzeichnet, dass** der Führungssteg (52) sowie die an den Schenkeln (61) des Bügelelements (6) angeordneten Führungsnuten (63) einen T-förmigen Querschnitt aufweisen.

8. Roller nach einem der vorgenannten Ansprüche, **dadurch gekennzeichnet, dass** die Schenkel (61) des Bügelelements (6) zumindest bereichsweise als C-Profil ausgebildet ist, wodurch die Führungsnuten (63) gebildet sind.

9. Roller nach einem der vorgenannten Ansprüche, **dadurch gekennzeichnet, dass** die Führungsstege (52) der Aufnahmen (5) an ihrem dem Trittelement (3) zugewandten Ende abgeschrägt, vorzugsweise in Art einer dreieck- oder trapezförmigen Kontur ausgebildet sind.

10. Roller nach Anspruch 9, **dadurch gekennzeichnet, dass** der Sperrriegel (73) über den Schlüssel (75) drehbar ist und eine schräge Fläche (74) aufweist, die in einer Drehstellung an eine Anschlagschräge (53) eines Führungssteges (52) anlegbar ist.

11. Roller nach einem der vorgenannten Ansprüche, **dadurch gekennzeichnet, dass** das Bügelelement (6) zumindest teilweise aus einem elastischen Material, vorzugsweise Kunststoff, und/oder zumindest teilweise aus Metall ausgebildet ist.

12. Roller nach einem der vorgenannten Ansprüche, **dadurch gekennzeichnet, dass** der Sperrriegel (73) des Schließelements (7) zumindest teilweise aus einem elastischen Material, vorzugsweise Kunststoff hergestellt ist.

## Claims

1. Scooter, in particular electric scooter (1) comprising a handle bar (2), which is pivotably connected to a tread element (3), which has a swingarm (32) at least at the rear, wherein an anti-theft device is arranged, by means of which the handle bar (2) can be fixed in the pivoted position, wherein the anti-theft device comprises a stirrup element (6), which encloses the handle bar (2) and can be positively connected with its free ends to two receptacles (5) oppositely arranged at the tread element (3) and can be locked in this position via at least one closing element (7), **characterised in that** the receptacles (5) each comprise a guide web (52), onto which a leg (61) of the stirrup element (6) can be pushed with a guide groove (63) arranged thereto for this purpose and wherein either a closing element (7) is arranged on at least one leg (61) of the stirrup element (6), which has a locking bolt (73), which can be moved into and out of the guide groove (63) of the leg (61) via a key (75), or a closing element is arranged on at least one receptacle (5), which has a locking bolt which can be moved via a key (75) into a bore, which is provided for this purpose in the leg (61) of the stirrup element (6) pushed onto the guide web (52).

2. Scooter according to claim 1, **characterised in that** the stirrup element (6) is angled in such a manner that in a second position, it can be positioned in the receptacles (5) in the manner of a carrier so as to project beyond the back wheel (31) of the rear-end swingarm (32).

3. Scooter according to claim 2, **characterised in that** in the second position, the stirrup element (6) projects beyond the back wheel (31) in a longitudinal direction.

4. Scooter according to claim 2 or 3, **characterised in that** the angled section of the stirrup element (6) projecting beyond the back wheel (31) is angularly positioned in such a manner that its vertical distance from the back wheel (31) increases towards the back.

5. Scooter according to one of claims 2 to 4, **characterised in that** at the rear-side swingarm (31), a protective plate (33) partially covering the back wheel (31) is arranged, which is enclosed by the stirrup element (6) in the second position.

6. Scooter according to one of the previous claims, **characterised in that** the receptacles (5) are oppositely attached to the rear-end swingarm (32).

7. Scooter according to one of the previous claims, **characterised in that** the guide web (52) as well as the guide grooves (63) arranged on the legs (61) of the stirrup element (6) have a T-shaped cross-section.

8. Scooter according to one of the previous claims, **characterised in that** the legs (61) of the stirrup element (6) are at least partially designed as a C-profile, thereby forming the guide grooves (63).

9. Scooter according to one of the previous claims, **characterised in that** the guide webs (52) of the receptacles (5) are bevelled at their end facing the tread element (3) and are preferably designed in the manner of a triangular or trapezoid contour.

10. Scooter according to claim 9, **characterised in that** the locking bolt (73) is rotatable via the key (75) and has an inclined surface (74), which can be placed against a stop bevel (53) of a guide web (52) in a rotary position.

11. Scooter according to one of the previous claims, **characterised in that** the stirrup element (6) is at least partially formed of an elastic material, preferably plastic and/or at least partially of metal.

12. Scooter according to one of the previous claims, **characterised in that** the
locking bolt (73) of the closing element (7) is at least partially made of an elastic material, preferably plastic.

## Revendications

1. Trottinette, en particulier trottinette électrique (1), comprenant un guidon (2) relié de manière basculante avec un marchepied (3) présentant au moins à l'arrière une bascule (32) pour roue, sachant qu'est disposé un antivol via lequel le guidon (2) est immobilisable en position pivotée,
sachant que l'antivol comprend un étrier (6) qui, tout en entourant le guidon (2), est reliable par ses extrémités libres - par adhérence de formes - à deux logements (5) se faisant face disposés contre le marchepied (3), et qui est verrouillable dans cette position via au moins un élément de fermeture 7, **caractérisée en ce**
**que** les logements (5) comprennent respectivement une nervure de guidage (52) sur laquelle une branche (61) de l'étrier (6) est enfilable avec une gorge de guidage (63) disposée contre ce dernier
et sachant que soit un élément de fermeture (7) est disposé contre au moins une branche (61) de l'étrier (6) qui présente un verrou de blocage (73) déplaçable, via une clé (75), vers l'intérieur de la gorge de guidage (63) de la branche (61) ainsi que vers l'extérieur de cette gorge,
soit qu'un élément de fermeture est disposé contre au moins un logement (5), élément qui présente un verrou de fermeture introductible au moyen d'une clé (75) dans un alésage prévu à cette fin dans la branche (61) de l'étrier (6) enfilée sur la nervure de guidage (52).

2. Trottinette selon la revendication 1, **caractérisée en ce que** l'étrier (6) est configuré coudé de sorte à être positionnable dans une deuxième position dans les logements (5), à la façon d'un porte-bagage, lui faisant dépasser la roue arrière (31) de la bascule arrière (32) de roue.

3. Trottinette selon la revendication 2, **caractérisée en ce que** l'étrier (6) lorsqu'en deuxième position dépasse la roue arrière (31) dans le sens longitudinal.

4. Trottinette selon la revendication 2 ou 3, **caractérisée en ce que** le segment coudé, dépassant la roue arrière (31), de l'étrier (6), est positionné selon un angle tel qu'il présente un écart vertical par rapport à la roue arrière (31) qui va en augmentant vers l'arrière.

5. Trottinette selon l'une des revendications 2 à 4, **caractérisée en ce que** contre la bascule arrière (32) de roue est disposée une tôle de protection (33) recouvrant localement la roue arrière (31), tôle qui sur la deuxième position est entourée par l'étrier (6).

6. Trottinette selon l'une des revendications précédentes, **caractérisée en ce que** les logements (5) sont fixés se faisant face contre la bascule arrière (32) de roue.

7. Trottinette selon l'une des revendications précédentes, **caractérisée en ce que** la nervure de guidage (52) ainsi que les gorges de guidage (63) disposées contre les branches (61) de l'étrier (6) présentent une section en T.

8. Trottinette selon l'une des revendications précédentes, **caractérisée en ce que** les branches (61) de l'étrier (6) sont au moins localement configurées profilées en C, conférant ainsi leur forme aux gorges de guidage (63).

9. Trottinette selon l'une des revendications précédentes, **caractérisée en ce que** les nervures de guidage (52) des logements (5) sont chanfreinées à leur extrémité regardant le marchepied (3), de préférence configurées en forme de contour de type triangulaire ou trapézoïdal.

10. Trottinette selon la revendication 9, **caractérisée en ce que** le verrou de blocage (73) peut être tourné via la clé (75) et présente une surface oblique (74) qui dans une position de rotation peut être appliquée contre une butée chanfreinée (53) d'une nervure de guidage (52).

11. Trottinette selon l'une des revendications précédentes, **caractérisée en ce que** l'étrier (6) est configuré au moins partiellement en matériau élastique, de préférence en matière plastique, et/ou au moins partiellement en métal.

12. Trottinette selon l'une des revendications précédentes, **caractérisée en ce que** le verrou de blocage (73) de l'élément de fermeture (7) est fabriqué au moins partiellement en matériau élastique, de préférence en matière plastique.
